# DEMANDE DE BREVET EUROPEEN

(11) **EP 1 338 570 A1**
(43) Date de publication de la demande: **27.08.2003**
(21) Numéro de dépôt: 02003893.1
(22) Date de dépôt: 21.02.2002
(51) Int. Cl.: C02F 3/02, B65D 88/76

(54) **Cuve en matière plastique pour station d'épuration d'eau modulalire, empilable et ancrable**

(71) Demandeur: EPUR S.A., 4000 Liege (BE)
(72) Inventeur: Hartenstein, Marcel, 4122 Plainevaux (BE)
(74) Mandataire: Kihn, Pierre Emile Joseph

(57) **Abrégé**

La présente invention propose une cuve en matière synthétique (12,14,16,18), comprenant un couvercle (40,42) ayant un bord inférieur et un bord supérieur. Le bord inférieur du couvercle repose sur la cuve en contact étanche tandis que le bord supérieur comprend au moins un logement pour un dispositif d'ancrage (34) et au moins un dispositif d'ancrage pouvant s'engager dans le logement.

## Description

La présente invention concerne une cuve en matière plastique pour réacteurs aérobies, en particulier dans les (micro)stations d'épuration d'eau. La cuve est modulable, elle peut être ancrée dans le sol et on peut les empiler les unes dans les autres pendant le transport.

Les réacteurs aérobies à lit fixe sont largement utilisés pour toutes sortes d'applications microbiologiques, qu'il s'agisse de dégradations d'effluents industriels ou domestiques, ou même de synthèses de produits à (haute) valeur ajoutée à l'aide de souches spécifiques de micro-organismes sélectionnés ou même génétiquement modifiés.

L'épuration individuelle des eaux domestiques peut être réalisée grâce à des petites stations (microstations) d'épuration qui comprennent plusieurs compartiments. L'eau passe successivement par les compartiments intégrant chacun une fonction différente, par exemple le dégraissage des eaux, la dégradation microbiologique, la décantation, etc.

La dégradation microbiologique dans ces microstations d'épuration est généralement réalisée au moyen d'un compartiment ou réacteur aérobie à lit fixe, dans lequel les micro-organismes peuvent se fixer sur un support structuré. Pour obtenir une épuration conforme à la réglementation, une aération ou oxygénation de ce lit est indispensable.

Ces microstations d'épuration sont souvent réalisées en matière plastique et sont enterrées dans le sol. Pour ce faire, il faut bien entendu creuser un trou et placer les cuves au fond de celui-ci. Ces cuves en matière plastique doivent être ancrées dans le sol pour éviter qu'elles ne soient déplacées par les fluctuations du niveau des nappes phréatiques. En effet, ces microstations étant légères peuvent être arrachées du sol par flottaison sur les eaux de la nappe phréatique.

Il est donc nécessaire d'ancrer dans le sol les cuves constituant ces microstations. Il existe divers systèmes d'ancrage sur le marché et l'objet de la présente invention est de proposer un nouveau système d'ancrage fiable et facile à installer.
La présente invention propose par conséquent une cuve en matière synthétique, comprenant un couvercle ayant un bord inférieur et un bord supérieur, le bord inférieur du couvercle reposant en contact étanche sur la cuve, le bord supérieur comprenant au moins un logement pour un dispositif d'ancrage et au moins un dispositif d'ancrage pouvant s'engager dans le logement.

Un avantage du présent système de fixation réside dans le fait que le dispositif d'ancrage est relié au couvercle de la cuve et non pas à la cuve elle-même. Ceci permet de minimiser le volume d'excavation lors du placement de la cuve. En effet, puisque les parois du trou excavé présentent une pente, le trou excavé est plus large sur son bord supérieur que sur son bord inférieur. Le fait de fixer les dispositifs d'ancrage, sur le bord supérieur du couvercle recouvrant la cuve, permet de pouvoir utiliser des dispositifs d'ancrage de taille plus importante pour un volume excavé donné.

Un autre avantage de la présente invention est que les dispositifs d'ancrage sont faciles à mettre en place. De plus, le fait de les introduire dans un logement prévu à cet effet permet de les maintenir en place pendant le remblayage du trou excavé.

Selon un premier mode de réalisation avantageux, le logement comprend un dispositif de fixation par pince formant ressort de sorte que le dispositif d'ancrage est fixé dans le logement par engagement dans le dispositif de fixation par pince.

Bien entendu, le nombre de logements est adapté aux caractéristiques dimensionnelles de la cuve.

De préférence, le dispositif d'ancrage comprend une tige en forme de Z.

Selon un autre mode de réalisation préféré, la cuve comprend en outre un dispositif de fixation comprenant un logement et une tige filetée permettant de fixer une deuxième cuve à la première cuve.

Ce système permet de disposer d'un système modulable dont la capacité peut facilement être adaptée aux besoins en rajoutant des cuves supplémentaires.

Dans le cas où deux cuves sont utilisées, il est préférable d'utiliser un seul couvercle recouvrant les deux cuves. Il devient alors possible de ne prévoir qu'un seul trou d'homme, ou trappe de visite, situé à cheval entre les deux cuves.

La cuve et le couvercle sont fabriqués en matériaux inaltérables. Ils peuvent être fabriqués en matière synthétique, de préférence en polyéthylène, en polypropylène, en PVC, ou en toute autre matière appropriée pour un tel usage.

Un avantage supplémentaire et non-négligeable pour l'usager final, est le prix comparativement réduit de ce système, qui est le résultat de la simplicité de conception de cette cuve et de sa flexibilité.

D'autres particularités et caractéristiques de l'invention ressortiront de la description détaillée de quelques modes de réalisation avantageux présentés ci-dessous, à titre d'illustration, en référence aux dessins annexés. Ceux-ci montrent:
Fig.1: une vue du côté d'une microstation d'épuration comprenant quatre cuves,
Fig.2: une vue de face de la microstation d'épuration suivant la Fig. 1 installée dans le sol
Fig.3: une vue du dessus de deux cuves
Fig.4: le détail d'un logement avec un dispositif d'ancrage,
Fig.5: le détail du dispositif de fixation de deux cuves.

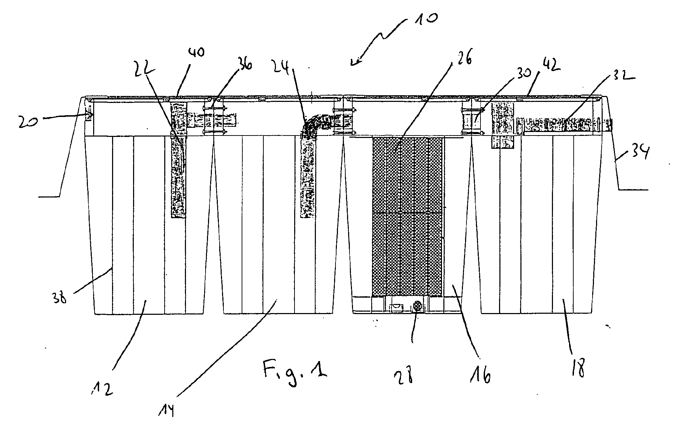

La Fig. 1 illustre le cas d'une microstation d'épuration d'eau 10 à quatre cuves 12, 14, 16, 18 qui sont reliées entre elles et permettent le passage de l'eau à traiter d'une cuve vers la suivante. Les cuves sont par conséquent modulables, elles peuvent facilement être adaptées à des débits différents en ajoutant plusieurs cuves en série et/ou en parallèle.L'eau à épurer arrive par l'entrée 20 dans la première cuve 12 et passe ensuite par la tubulure 22 dans la deuxième cuve 14. Ces deux première cuves constituent le compartiment de décantation et de dégraissage.

Les eaux passent ensuite par la tubulure 24 dans la troisième cuve 16 qui comprend le compartiment de dégradation microbiologique aérobie à lit fixe 26 en dessous duquel est installé un aérateur à membrane 28. L'eau passe ensuite dans la dernière cuve 18 - le compartiment de décantation - via la tubulure 30, avant de quitter, épurée, la microstation par la sortie 32.

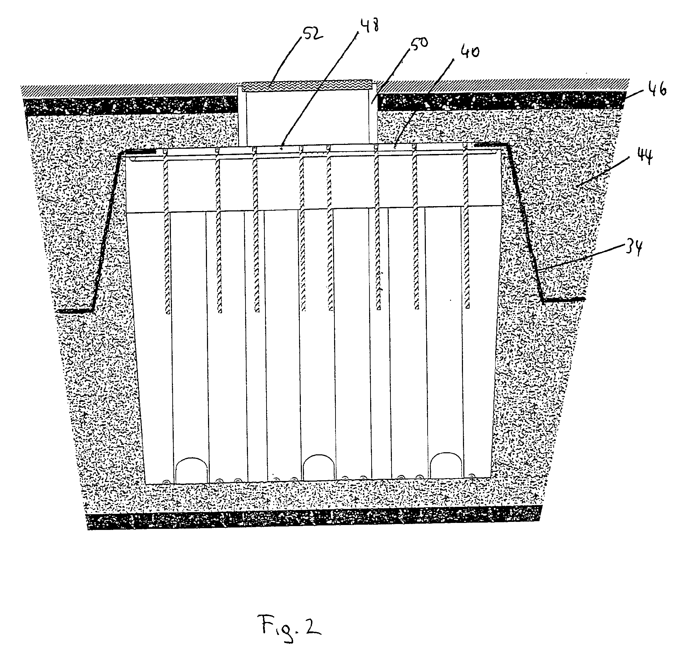

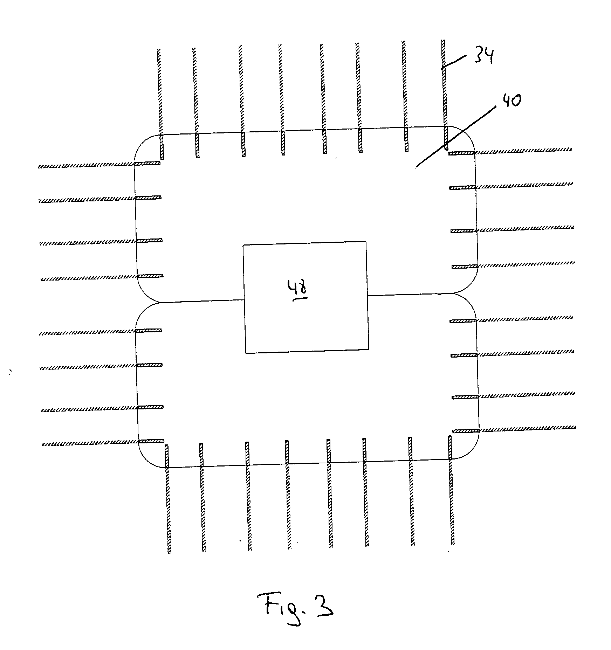

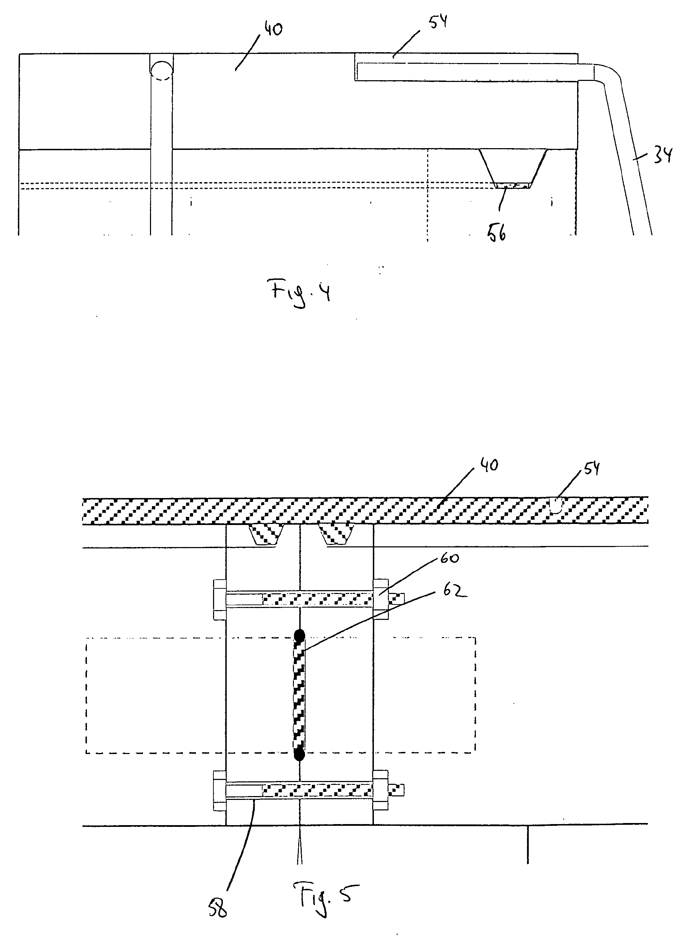

Sur cette figure on peut distinguer également les tiges d'ancrage en forme de Z 34 et les dispositifs de fixation 36 solidarisant deux cuves adjacentes. Les tiges d'ancrage et les dispositifs de fixation seront décrits plus en détail en relation avec les figures 4 et 5.

Afin d'augmenter leur résistance mécanique, les cuves 12,14, 16, 18 sont munies de nervures de renforcement 38 sur les parois.

Pour faciliter le transport jusqu'au chantier, les cuves 12, 14, 16, 18 ont une forme qui permet de les emboîter les unes dans les autres. Le fait d'être emboîtable permet d'empiler plusieurs cuves les unes dans les autres et de diminuer ainsi les frais de transport.

Les cuves 12,14, 16, 18 sont couvertes par deux couvercles 40, 42 de sorte qu'un couvercle recouvre deux cuves contiguës.

La microstation d'épuration 10, suivant la Fig. 1, vue de face et installée dans le sol est reprise à la Fig.2.

Sur cette figure on peut distinguer les tiges d'ancrage 34 maintenant la cuve en place. Les tiges d'ancrage 34 sont installées, à des intervalles réguliers, sur le pourtour du couvercle et maintiennent les cuves en place dans les remblais 44 constitués de sable ou de béton maigre. Dans cet exemple concret, une dalle en béton 46 a été coulée au-dessus des cuves.

Bien entendu, le nombre, la forme et la taille des tiges d'ancrage 34 sont choisis en fonction des caractéristiques des cuves et des caractéristiques du sol.

On y voit également une trappe de visite 48 avec sa rallonge 50 permettant de placer le couvercle 52 de la trappe de visite 48 au ras du sol.

La Fig. 3 montre une vue du dessus de deux cuves 12, 14 adjacentes avec leurs tiges d'ancrage 34. Les deux cuves 12, 14 sont recouvertes par un seul couvercle 40. Deux cuves contiguës 12, 14 sont munies d'une trappe de visite 48 unique pour pouvoir procéder à l'entretien de la station d'épuration. La trappe de visite 48 unique est située à cheval entre les deux cuves 12,14. Le fait de disposer d'une seule trappe de visite 48 pour deux cuves 12, 14 permet de diminuer les coûts de fabrication de l'installation.

Le couvercle 40 est ancré dans le sol à l'aide des tiges d'ancrage 34 qui sont installées dans des logements 54 prévus à cet effet dans la partie supérieure du couvercle 40.

Sur la Fig. 4, la référence 40 identifie le couvercle qui est posé sur la cuve 12. Un joint d'étanchéité 56 permet d'assurer que les eaux à épurer ne s'échappent pas d'une manière incontrôlée dans le sol environnant. A des espaces réguliers dans le couvercle sont prévus des logements 54 pour les tiges d'ancrage. Ces logements 54 sont formés d'un évidement dans lequel est introduit une extrémité d'une tige d'ancrage 34. Les logements sont dimensionnés de sorte à maintenir les tiges d'ancrage 34 en place. On évite ainsi que celles-ci ne soient délogées pendant le remblayage du trou excavé par du sable ou du béton maigre. Afin de renforcer le maintien des tiges d'ancrage à l'intérieur du logement, on peut prévoir un système de pinces formant ressort.

La Fig. 5 montre le dispositif de fixation de cuves adjacentes. Les parois des deux cuves comprennent des trous 58 situés en face les uns des autres de façon à permettre le passage d'une tige filetée ou d'un boulon 60. Au niveau du passage de la tubulure, l'étanchéité du dispositif est assurée par un joint 62 approprié tel qu'un anneau torique d'étanchéité (O-ring).

| Liste des références | |
|---|---|
| 10 | microstation d'épuration d'eau |
| 12 | Première cuve |
| 14 | Deuxième cuve |
| 16 | Troisième cuve |
| 18 | Quatrième cuve |
| 20 | Entrée de l'eau à épurer |
| 22 | Tubulure |
| 24 | Tubulure |
| 26 | Lit fixe |
| 28 | Aérateur à membrane |
| 30 | Tubulure |
| 32 | Sortie |
| 34 | Tige d'ancrage en forme de Z |
| 36 | Dispositif de fixation |
| 38 | Nervure de renforcement |
| 40, 42 | Couvercles |
| 44 | Remblais |
| 46 | Dalle en béton |
| 48 | Trappe de visite |
| 50 | Rallonge |
| 52 | Couvercle de la trappe de visite |
| 54 | Logement pour la tige d'ancrage |
| 56 | Joint d'étanchéité |
| 58 | Trous |
| 60 | Boulon |
| 62 | Joint |

## Revendications

1. Cuve en matière synthétique, comprenant un couvercle ayant un bord inférieur et un bord supérieur, le bord inférieur du couvercle reposant sur la cuve en contact étanche, le bord supérieur comprenant au moins un logement pour un dispositif d'ancrage et au moins un dispositif d'ancrage pouvant s'engager dans le logement.

2. Cuve selon la revendication 1, **caractérisée en ce que** le logement comprend un dispositif de fixation et **en ce que** le dispositif d'ancrage est fixé dans le logement par engagement dans la dispositif de fixation par pince.

3. Cuve selon l'une quelconque des revendications précédentes, **caractérisée en ce que** le nombre de logements est adapté aux caractéristiques dimensionnelles et à la capacité de la cuve.

4. Cuve selon l'une quelconque des revendications précédentes, **caractérisée en ce que** le dispositif d'ancrage comprend une tige en forme de Z.

5. Cuve selon l'une quelconque des revendications précédentes, **caractérisée par** un dispositif de fixation permettant de fixer une deuxième cuve à la première cuve.

6. Cuve selon la revendication 5, **caractérisée en ce que** le dispositif de fixation comprend un logement et une tige filetée.

7. Cuve selon l'une quelconque des revendications 5 ou 6, **caractérisée en ce que** deux cuves adjacentes sont recouvertes par un seul couvercle.

8. Cuve selon la revendication 7, **caractérisée en ce que** le couvercle comprend un trou d'homme, ou une trappe de visite, situé(e) à cheval sur les deux cuves.

9. Cuve selon l'une quelconque des revendications précédentes, **caractérisée en ce que** la cuve est modulable.

10. Cuve selon l'une quelconque des revendications précédentes, **caractérisée en ce que** la cuve est empilable.

11. Utilisation de la cuve selon l'une quelconque des revendications précédentes comme (micro)station d'épuration.
